(19) Europäisches Patentamt
European Patent Office
Office européen des brevets

(11) **EP 2 128 727 A1**

(12) **EUROPÄISCHE PATENTANMELDUNG**

(43) Veröffentlichungstag:
**02.12.2009 Patentblatt 2009/49**

(51) Int Cl.:
**G05B 19/042** (2006.01)  **F02D 28/00** (2006.01)

(21) Anmeldenummer: **08009837.9**

(22) Anmeldetag: **29.05.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Continental Automotive GmbH**
**30165 Hannover (DE)**

(72) Erfinder:
• **Brüll, Martin, Dr.**
**93092 Barbing (DE)**
• **Mader, Ralph**
**93077 Bad Abbach (DE)**
• **Reuther, Achim, Dr.**
**95346 Stadtsteinach (DE)**

(54) **Verfahren und Computerprogrammprodukt zur Bereitstellung eines speicherplatzreduzierten Steuerprogrammes**

(57) Die Erfindung betrifft ein Verfahren zur Bereitstellung eines Speicherplatzreduzierten Steuerprogramms in einem Steuergerät, insbesondere in einem Motorsteuergerät, mit den Schritten: Bereitstellen zumindest eines codierten generischen Regelalgorithmus, welcher für eine Vielzahl verschiedener generischer Steuergeräte vorgesehen ist, Bereitstellen eines zumindest eindimensionalen Kalibrations-Arrays für diesen generischen Regelalgorithmus, wobei jede Dimension des Kalibrations-Arrays einem physikalischen Parameter zugeordnet ist und der Kalibriergrößen mit vorgegebenen Kalibierwerten enthält; Untersuchen der Kalibrationsgrößen des Kalibrations-Arrays auf mathematische Zusammenhänge; Modifizieren zumindest eines Teils des Inhalts des Kalibrations-Arrays durch eine die erkannten mathematische Zusammenhänge wiedergebende mathematische Funktion, sofern diese mathematische Funktion einen geringeren Speicheraufwand aufweist; Konfigurieren des generischen Regelalgorithmus unter Verwendung des modifizierten Kalibrations-Arrays. Die Erfindung betrifft ferner ein Computerprogrammprodukt.

FIG 1

FIG 1A

EP 2 128 727 A1

**Beschreibung**

Die Erfindung betrifft ein Verfahren zur Bereitstellung eines speicherplatzreduzierten Steuerprogramms in einem Steuergerät, insbesondere in einem Motorsteuergerät, Steuergeräten und ein Computerprogrammprodukt.

Unter einer modernen Motorsteuerung, die häufig auch als Motorsteuergerät oder "Engine Control Unit" (ECU) bezeichnet wird, ist ein eigens für die Verwendung bei einem Verbrennungsmotor in einem Kraftfahrzeug entwickelter Computer zu verstehen, der die Steuerung motorspezifischer Funktionen übernimmt. Die vorliegende Erfindung sowie die ihr zugrunde liegende Problematik werden nachfolgend beispielhaft anhand eines Motorsteuergeräts beschrieben, ohne jedoch die Erfindung ausschließlich auf die Anwendung bei solchen Steuergeräten einzuschränken.

Das Motorsteuergerät ist eines der wichtigsten Steuergeräte eines Kraftfahrzeuges. Es übernimmt die notwendigen Berechnungen zum Betrieb des Verbrennungsmotors im Kraftfahrzeug, wie z. B. die Steuerung der Basismotorfunktionen. Bei der Motorsteuerung handelt es sich typischerweise nicht um eine offene Steuerung, sondern um eine geschlossene Regelung, für die eine Vielzahl verschiedener Regelalgorithmen erforderlich sind. Für diese Regelalgorithmen verarbeitet das Motorsteuergerät, entsprechend der jeweiligen Steueraufgabe, eine Vielzahl verschiedener Sensordaten und/ oder Bedienereingabesignale. Diese Sensordaten und Bedienereingabesignale werden entsprechend der voreingestellten Regelalgorithmen verarbeitet, um dadurch entsprechende Sollgrößen als Steuersignale für entsprechende Stellglieder zu erhalten.

Moderne Motorsteuergeräte weisen eine Vielzahl verschiedenster Funktionen und Aufgaben auf und sind in der Folge äußerst umfangreich und komplex ausgebildet. Dies spiegelt sich insbesondere in der Vielzahl der in einem heutigen Motorsteuergerät implementierten, unterschiedlichen Regelalgorithmen wieder, die für die Verarbeitung der entsprechenden Sensordaten und Bedienereingangssignale benötigt werden. Diese Regelalgorithmen werden typischerweise unabhängig voneinander entwickelt, um dadurch die Entwicklungsdauer der Motorsteuergeräte und deren Programme weitestgehend zu reduzieren. Mit wachsenden Anforderungen an die Systeme in einem Kraftfahrzeug und insbesondere in einem durch die Motorsteuerung gesteuerten Verbrennungsmotor ist der Umfang der durch die Motorsteuerung übernommenen Aufgaben in der Vergangenheit stetig gestiegen und wird voraussichtlich noch weiter zunehmen.

Die vorliegende Erfindung befindet sich auf dem Gebiet des Motortunings von Verbrennungsmotoren durch geeignete Konfiguration von Regelalgorithmen, die zur Steuerung und Regelung der Motorkenndaten erforderlich sind. Die Konfiguration dieser Regelalgorithmen findet über so genannte Kalibrationsgrößen statt.

Bei heutigen Kraftfahrzeugen wird häufig eine Vielzahl unterschiedlicher Verbrennungsmotortypen für denselben Kraftfahrzeugtyp verwendet, die sich jeweils in der Leistung, dem Hubraum, der Turbo-Aufladung, der Anzahl und der Anordnung der Zylinder, die Art der Einspritzung und dergleichen unterscheiden. Für jeden dieser Verbrennungsmotortypen ist in der Folge ein eigens diesem Verbrennungsmotortyp zugeordnetes Motortuning erforderlich. D. h. die durch die Motorsteuerung bereitgestellten Regelalgorithmen müssen auf den jeweiligen Verbrennungsmotortyp ausgelegt sein. Bei der eben genannten Vielzahl verschiedener Verbrennungsmotortypen würde dies bedeuten, dass für jeden Verbrennungsmotortyp eine eigene Motorsteuerung entwickelt werden müsste. Dies würde außerordentlich Entwicklungs-aufwändig und in der Folge Kostenaufwändig sein, sodass diese Lösung sich als nicht praktikabel erweist. Um den Entwicklungsaufwand in Bezug auf die Motorsteuerung zu reduzieren, werden daher generische Lösungen für die Motorsteuerung angestrebt. Diese generischen Lösungen sehen vor, dass für die verschiedensten Verbrennungsmotortypen typischerweise wenige und vorzugsweise nur eine einzige, generische Motorsteuerung verwendet wird, die dann durch geeignete Konfiguration der Regelalgorithmen auf die verschiedenen Verbrennungsmotoren angepasst werden kann. Aus diesem Grunde werden für die Entwicklung dieser generischen Motorsteuerungen so genannte generische Regelalgorithmen verwendet. Ein solcher generischer Regelalgorithmus ist für verschiedene Verbrennungsmotortypen identisch, verhält sich allerdings abhängig von der Konfiguration des generischen Regelalgorithmus bei verschiedenen Verbrennungsmotoren jeweils unterschiedlich.

Für die Konfiguration des generischen Regelalgorithmus werden zweckmäßigerweise mehrdimensionale Kalibrations-Arrays für verschiedene Kalibrationsgrößen verwendet. Jede Dimension des mehrdimensionalen Kalibrations-Arrays ist einem bestimmten physikalischen Parameter zugeordnet. Für die Kalibration werden diese Kalibrationsgrößen oder davon abgeleitete Größen aus dem mehrdimensionalen Kalibrations-Array beispielsweise durch eine Interpolation der im Kalibrations-Array abgelegten Kalibrationsgrößen ermittelt.

Die Verwendung solcher mehrdimensionaler Kalibrations-Arrays hat den Zweck, dass dadurch den verschiedenen Kalibrationsgrößen eine Vielzahl von verschiedenen physikalischen Parametern zugeordnet werden kann, deren Werte zum Beispiel auf tatsächlichen physikalischen Messwerten, Erfahrungswerten, Schätzungen, etc. basieren. Untersuchungen der Anmelderin haben allerdings ergeben, dass dies relativ selten vorkommt. Tatsächlich ist in vielen Systemen für Motorsteuerungen keine oder kaum eine Abhängigkeit der einem physikalischen Parameter jeweils zugeordneten Kalibrationsgröße berücksichtigt. Die jeweils einem physikalischen Parameter entsprechenden Kalibrationsgrößen weisen daher meist einen konstanten Wert auf, d.h. sie sind identisch, oder folgen beispielsweise einem einfachen mathematischen Zusammenhang. Bei mehrdimensionalen Kalibrations-Arrays kann es sogar dazu kommen, dass sämtliche Kalibrationsgrößen des Kalibrations-Arrays mit einem konstanten, identischen Wert belegt sind oder einem einfachen mathematischen Zusammenhang folgen.

Diese Kalibrations-Arrays werden in einem Speicher der Motorsteuerung abgelegt. Das Speichern sehr komplexer, mehrdimensionaler Kalibrations-Arrays geht natürlich einher mit einem entsprechend hohen Speicheraufwand, auch wenn diese Kalibrations-Arrays nur mit konstanten Werten belegt sind.

Darüber hinaus ist durch den Prozessor des Motorsteuergeräts ein relativ großer Rechenaufwand für das Verarbeiten der auf diesen Kalibrations-Arrays basierenden Regelalgorithmen erforderlich. Für die Verarbeitung der in dem Kalibrations-Array enthaltenen Werte ist ein Prozessor des Motorsteuergerätes vorgesehen. Bei modernen Motorsteuergeräten, die zur Verarbeitung der Kalibrationsgrößen von mehrdimensionalen Kalibrations-Arrays vorgesehen sind, ist insofern ein erhöhter Rechenaufwand erforderlich. Dabei ist insbesondere die Interpolation der einer Kalibrationsgröße zugeordneten Werte ein besonders rechenaufwändiger Verfahrensschritt. Dieser erhöhte Rechenaufwand wird aufgrund der dadurch gewonnenen verbesserten Möglichkeit des Motortunings bei Verbrennungsmotoren in Kauf genommen, selbst wenn bei einzelnen Systemen diese verbesserte Möglichkeit des Motortunings nicht zum Einsatz kommt, da so immer noch die Möglichkeit existiert, bei demselben Verbrennungsmotor zu einem späteren Zeitpunkt diese Möglichkeit des verbesserten Motortunings einzusetzen.

Dieser Hardwareaufwand, d. h. der Mehraufwand für den Prozessor einerseits und für den Speicher andererseits, stellt einen signifikanten Kostenanteil bei einem Motorsteuergerät dar. Aus diesem Grunde besteht grundsätzlich der Bedarf, bei einem Motorsteuergerät den Speicheraufwand und/oder den Rechenaufwand zu reduzieren.

Vor diesem Hintergrund ist es eine Aufgabe der vorliegenden Erfindung, ein Speicherplatz reduziertes Steuerprogramm für programmgesteuerte Einrichtungen in Steuergeräten und insbesondere in Motorsteuergeräten bereitzustellen.

Erfindungsgemäß wird diese Aufgabe durch Verfahren mit den Merkmalen der Patentansprüche 1 und 2 und/oder durch ein Computerprogrammprodukt mit den Merkmalen des Patentanspruchs 16 gelöst.

Demgemäß ist vorgesehen:

Ein Verfahren zur Bereitstellung eines Speicherplatzreduzierten Steuerprogramms in einem Steuergerät, insbesondere in einem Motorsteuergerät, mit den Schritten:

(a) Bereitstellen eines zumindest eindimensionalen Kalibrations-Arrays für einen Regelalgorithmus, wobei jede Dimension des Kalibrations-Arrays einem Parameter zugeordnet ist und wobei ein jeweiliges Kalibrations-Array Kalibriergrößen mit vorgegebenen Kalibierwerten enthält;
(b) Untersuchen der Kalibrationsgrößen des Kalibrations-Arrays auf mathematische Zusammenhänge;
(c) Ersetzen zumindest eines Teils des Inhalts des Kalibrations-Arrays durch eine die erkannten mathematische Zusammenhänge wiedergebende mathematische Funktion, sofern diese mathematische Funktion einen geringeren Speicheraufwand erfordert oder das Ausführen dieser mathematischen Funktion eine geringeren Rechenaufwand in Anspruch nimmt;
(d) Konfigurieren des Regelalgorithmus unter Verwendung der gefundenen mathematischen Funktion.

Ein Verfahren zur Bereitstellung eines Speicherplatzreduzierten Steuerprogramms in einem Steuergerät, insbesondere in einem Motorsteuergerät, mit den Schritten:

(a) Bereitstellen eines zumindest eindimensionalen Kalibrations-Arrays für einen Regelalgorithmus, wobei jede Dimension des Kalibrations-Arrays einem Parameter zugeordnet ist und wobei ein jeweiliges Kalibrations-Array Kalibriergrößen mit vorgegebenen Kalibierwerten enthält;
(b) Untersuchen der Kalibrationsgrößen des Kalibrations-Arrays auf mathematische Zusammenhänge;
(c) Reduzieren zumindest eines Teils des Inhalts des Kalibrations-Arrays durch ein die erkannten mathematische Zusammenhänge wiedergebende reduziertes Kalibrations-Array, sofern das reduzierte Kalibrations-Array einen geringeren Speicheraufwand erfordert oder eine Interpolation der Kalibrationswerte des reduzierten Kalibrations-Arrays einen geringeren Rechenaufwand in Anspruch nimmt;
(d) Konfigurieren des Regelalgorithmus unter Verwendung des reduzierten Kalibrations-Arrays.

- Ein Computerprogrammprodukt, das direkt in den internen Speicher einer programmgesteuerten Einrichtung ladbar ist und das Softwarecodeabschnitte umfasst, mit denen die Verfahrensschritte ausgeführt werden, wenn das Produkt auf der programmgesteuerten Einrichtung abläuft.

Die der vorliegenden Erfindung zugrunde liegende Idee besteht darin, bei einem ein- oder auch mehrdimensionalen Kalibrations-Array, welches in einem Steuergerät und insbesondere in einem Motorsteuergerät verwendet wird, einfache mathematische Zusammenhänge und insbesondere konstante Kalibrationsgröße innerhalb des Kalibrations-Arrays zu erkennen und diese durch entsprechende Speicherplatz reduzierte mathematische Zusammenhänge für diese Kalibrationsgröße zu ersetzen. Auf diese Weise wird sowohl der Speicherplatz für die im Kalibrations-Array hinterlegten Daten, als auch die Durchführung des Interpolationsalgorithmus und damit die für die Verarbeitung der im Kalibrations-Array abgelegten Kalibrationsdaten signifikant reduziert.

Der mit der Erfindung einhergehende wesentliche Vorteil besteht darin, dass sich damit ein deutlich reduzierter Speicherbedarf innerhalb des Steuergerätes sowie eine signifikant reduzierte Prozessorbelastung ergeben. Dies ermöglicht Speicher mit kleinerem Flächenbedarf und Prozessoren mit geringerer Rechenleistung, was sich direkt in einer Kostenreduzierung für das Steuergerät bemerkbar macht, wobei dieses Steuergerät nach wie vor dieselbe Funktionalität beibehält. Darüber hinaus weist die Funktionalität nach wie vor die Möglichkeit einer Erweiterung auf, indem, sofern dies erforderlich oder gewünscht ist, das ursprünglich verwendete Kalibrations-Array verwendet werden, das dann z.B. mit entsprechend diversifizierten Werten des Kalibrationsarrays belegt ist. Dabei kann eine effiziente generische Funktionsentwicklung beibehalten werden oder sogar erweitert werden.

Ein weiterer Vorteil besteht auch darin, dass nun keine Notwendigkeit besteht, bereits bestehende Programmcodes, die für die programmgesteuerte Einrichtung für die Steuerung benötigt werden, zu verändern, um die erfindungsgemäß reduzierten Kalibrationsgrößen wieder auf ihre ursprüngliche Größe zu bringen.

Vorteilhaft ist ferner, dass das erfindungsgemäße Verfahren automatisiert durchgeführt werden kann, sodass hierfür kein zeitlicher Zusatz-Aufwand in Kauf genommen werden muss.

Vorteilhafte Ausgestaltungen und Weiterbildungen der Erfindung ergeben sich aus den weiteren Unteransprüchen sowie aus der Beschreibung unter Bezugnahme auf die Zeichnungen.

In einer besonders bevorzugten Ausgestaltung wird zunächst zumindest ein codierter generischer Regelalgorithmus bereitgestellt, welcher für eine Vielzahl verschiedener generischer Steuergeräte vorgesehen ist.

In einer besonders bevorzugten Ausgestaltung erfolgt ein Anpassen und Codieren des generischen Regelalgorithmus an eine projektspezifisch vorgegebene Motorsteuerung. Diese erfolgt typischerweise vor dem Verfahrensschritt (e) und vorzugsweise sogar vor dem Verfahrensschritt (c). Unter einer projektspezifisch vorgegebenen Motorsteuerung ist zu verstehen, dass diese entsprechend Vorgaben, die zum Beispiel von Kunden geäußert werden, angepasst werden. Diese projektspezifische Anpassung geht von der Erkenntnis aus, dass die Steuergerät für verschiedene Anwendungen, beispielsweise für die verschiedenen Anwendungen verschiedener Hersteller, auch unterschiedlich ausgestaltet sein können, da diese unterschiedlichen Hersteller typischerweise auch unterschiedliche Schwerpunkte bei der Anwendung und den Eigenschaften legen. So kann es zum Beispiel sein, dass ein erster Hersteller eine Motorsteuerung für eine besonders sportliche Auslegung des Verbrennungsmotors einstellen möchte, wohingegen für einen anderen Hersteller eine eher komfortablere, ruhigere Betriebsweise dieses Verbrennungsmotors gewünscht ist. Dies kann durch die projektspezifische Anpassung erfolgen, wobei hier vorteilhafterweise eben dieselbe Motorsteuerung und damit auch dieselben generischen Regelalgorithmen verwendet werden können.

In einer besonders bevorzugten Ausgestaltung erfolgt ein Erzeugen des Steuerprogramms auf der Basis des modifizierten Kalibrations-Arrays im Anschluss an den Verfahrensschritt (e). Dieser Verfahrensschritt wird häufig auch als Software-Build-Prozess bezeichnet, bei dem die verschiedenen konfigurierten Regelalgorithmen unter Verwendung einer gängigen Programmiersprache (zum Beispiel C) programmiert werden.

In einer Ausgestaltung der vorliegenden Erfindung werden die vorgegebenen Kalibrierwerte aus Erfahrungswerten, Tabellen, Schätzwerten und dergleichen abgeleitet. Denkbar wäre hier auch, dass die vorgegebenen Kalibrierwerte sich aus Messwerten ableiten lassen, wenngleich dies eine außerordentlich aufwändige Maßnahme ist. Denkbar wäre auch, dass die Kalibrierwerte näherungsweise einem bekannten mathematischen Zusammenhang folgen, aus dem diese Kalibrierwerte dann berechnet werden. Hier wird dann billigend in Kauf genommen, dass es sich bei diesen Kalibrierwerten nicht um exakte, sondern lediglich näherungsweise berechnete Kalibrierwerte handelt.

In einer typischen Ausgestaltung bezeichnen die mathematischen Zusammenhänge innerhalb des Kalibrations-Arrays mehrfach vorhandene, identische Kalibrierwerte und/oder Stützstellen für jeweils dieselbe Kalibriergröße.

In einer besonders bevorzugten Ausgestaltung wird zumindest ein Interpolationsschritt, der üblicherweise verwendet wird, um aus dem Kalibrations-Array Werte zum Konfigurieren der Regelalgorithmen abzuleiten, durch eine die Interpolation ersetzende oder zumindest näherungsweise nachbildende mathematische Funktion ersetzt. Auf diese Weise kann ein signifikanter Rechenaufwand für die Durchführung des Interpolationsalgorithmus gespart werden.

In einer besonders bevorzugten Ausgestaltung wird bei der Untersuchung im Verfahrensschritt (c) dahingehend, ob ein mathematischer Zusammenhang besteht, überprüft, ob ein auf der Basis des nicht modifizierten Kalibrations-Arrays durchgeführter Interpolationsalgorithmus zu gleichen Ergebnissen führt wie bei einer Berechnung oder Nachbildung der diesen mathematischen Zusammenhang ersetzenden mathematischen Funktion. Vorzugsweise wird bei dieser Überprüfung eine vorgegebene Toleranzgrenze vorgesehen, innerhalb der ein Ergebnis noch als gleich angesehen werden kann. Dies geht von der Erkenntnis aus, dass typischerweise gleiche Ergebnisse aufgrund der im vorliegenden Fall sehr großen Toleranzen selten tatsächlich realisiert werden.

In einer Ausgestaltung der vorliegenden Erfindung erfolgt ein Ersetzen einer Kalibriergröße durch einen einzigen konstanten Wert nur dann, wenn das Kalibration-Array für diese Kalibriergröße mit identischen vorgegebenen Kalibrierwerten belegt ist.

In einer alternativen Ausgestaltung erfolgt ein Ersetzen des gesamten Kalibrations-Arrays durch einen einzigen konstanten Wert, sofern das Kalibrations-Array vollständig mit identischen vorgegebenen Kalibrationswerten belegt ist.

In einer alternativen Ausgestaltung erfolgt ein Ersetzen des gesamten Kalibrations-Arrays durch ein Kallibrations-Array mit reduziertem Inhalt, sofern das gesamte Kalibrations-Array zumindest teilweise mit identischen vorgegebenen Kalibrierwerten belegt ist.

In einer alternativen Ausgestaltung erfolgt ein Ersetzen einer Kalibriergröße durch die ermittelte mathematische Funktion, sofern sich die Werte dieser Kalibriergröße oder deren Stützstellen durch eine mathematische Funktion zumindest näherungsweise (innerhalb gewisser Toleranzen) nachbilden lassen.

Typischerweise ist jede Dimension des Kalibrations-Arrays einem physikalischen Parameter zugeordnet. Ein physikalischer Parameter kann z.B. den Ladedruck, die Temperatur, die Motordrehzahl und dergleichen bezeichnen. Denkbar wäre allerdings auch, dass der Parameter einen Zwischenwert, einen Zählerstand oder dergleichen bezeichnet.

Die Erfindung wird nachfolgend anhand der in den Figuren der Zeichnung angegebenen Ausführungsbeispiele beschrieben. Es zeigen dabei:

Fig. 1 ein Schema eines Kalibrations-Arrays zur Darstellung eines ersten Ausführungsbeispiels des erfindungsgemäßen Verfahrens;

Fig. 1A ein Detail aus Fig. 1;

Fig. 2 ein Schema eines Kalibrations-Arrays zur Darstellung eines zweiten Ausführungsbeispiels des erfindungsgemäßen Verfahrens;

Fig. 3 ein Schema eines Kalibrations-Arrays zur Darstellung eines dritten Ausführungsbeispiels des erfindungsgemäßen Verfahrens;

Fig. 4 ein Ablaufdiagramm eines besonders bevorzugten Ausführungsbeispiels des erfindungsgemäßen Verfahrens;

Fig. 5 ein schematisch dargestelltes Motorsteuergerät zur Durchführung des erfindungsgemäßen Verfahrens.

In allen Figuren der Zeichnung sind gleiche und funktionsgleiche Elemente - sofern nichts Anderes angegeben ist - mit denselben Bezugszeichen versehen.

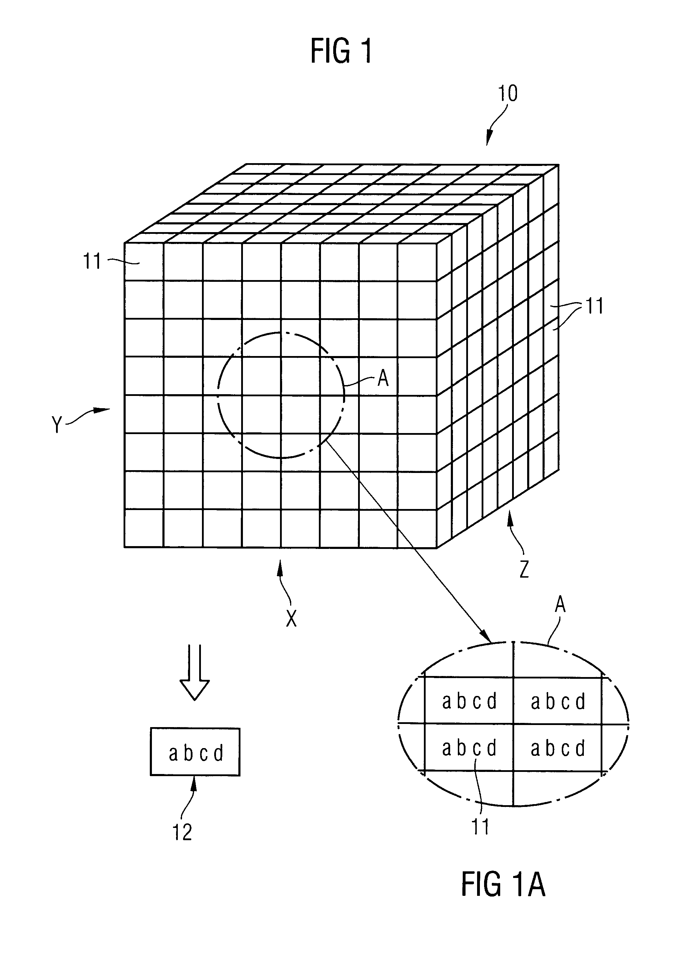

Fig. 1 zeigt ein Schema eines Kalibrations-Arrays zur Darstellung eines ersten Ausführungsbeispiels des erfindungsgemäßen Verfahrens.

In Fig. 1 ist mit Bezugszeichen 10 ein Kalibrations-Array bezeichnet. Dieses Kalibrations-Array 10 dient der Konfiguration von Regelalgorithmen, die z. B. in Steuergeräten und insbesondere in einem Motorsteuergerät eines Kraftfahrzeuges verwendet werden können. Im Beispiel in der Fig. 1 ist das Kalibrations-Array 10 in der Software eines Motorsteuergerätes implementiert. Das Kalibrations-Array 10 ist als dreidimensionales Kalibrations-Array ausgebildet. Dieses Kalibrations-Array 10 enthält somit drei Koordinaten (Dimensionen) X, Y, Z. Jede Koordinate X, Y, Z des Kalibrations-Arrays 10 entspricht dabei einem physikalischen Parameter, wie etwa dem Druck, der Temperatur, der Motordrehzahl und dergleichen. Das Kalibrations-Array 10 weist insgesamt $8^3$=512 einzelne Kalibrationselemente 11 auf. Jedes Kalibrationselement 11 des Kalibrations-Arrays 10 enthält jeweils eine Einzelinformation, also einen Wert, von z. B. jeweils 4 Byte.

Im vorliegenden Ausführungsbeispiel sei angenommen, dass sämtliche Kalibrationselemente 11 des Kalibrations-Arrays 10 mit jeweils demselben Wert a, b, c, d belegt sind. Fig. 1a zeigt ein Detail A des Kalibrations-Arrays 10, welches diesen Zustand veranschaulicht. Somit ist das gesamte Kalibrations-Array 10 mit seinen insgesamt 512 Elementen konstant mit demselben Wert belegt.

Erfindungsgemäß wird dieses Kalibrations-Array 10 als ganzes durch eine einzige Konstante 12 der Größe 4 Byte ersetzt. Der konstante Wert 12 entspricht dabei (im Wesentlichen) den Belegungen in den verschiedenen Kalibrationselementen des Kalibrations-Arrays 10.

Für die im Kalibrations-Array 10 abgelegten Daten ist ein Speicherplatzbedarf von mehr als 2 KByte erforderlich, der durch das erfindungsgemäße Verfahren, d. h. durch das Ersetzen des Kalibrations-Arrays 10 durch einen konstanten Wert 12, für welchen lediglich 4 Byte verwendet werden, nahezu beseitigt wird. Auf diese Weise ergibt sich eine signifikante Reduzierung der in dem Kalibrations-Array 10 abgelegten Daten.

Daneben erübrigt sich auch eine spezifizierte Interpolation zur Ermittlung von durch die Elemente 11 sich ergebenden Kalibrierwerten, da das Ergebnis dieser Interpolation bereits feststeht. Auf diese Weise kann auch der Rechenaufwand, der durch eine programmgesteuerte Einrichtung innerhalb des Motorsteuergerätes bereitgestellt werden muss, auf ein Mindestmaß reduziert werden.

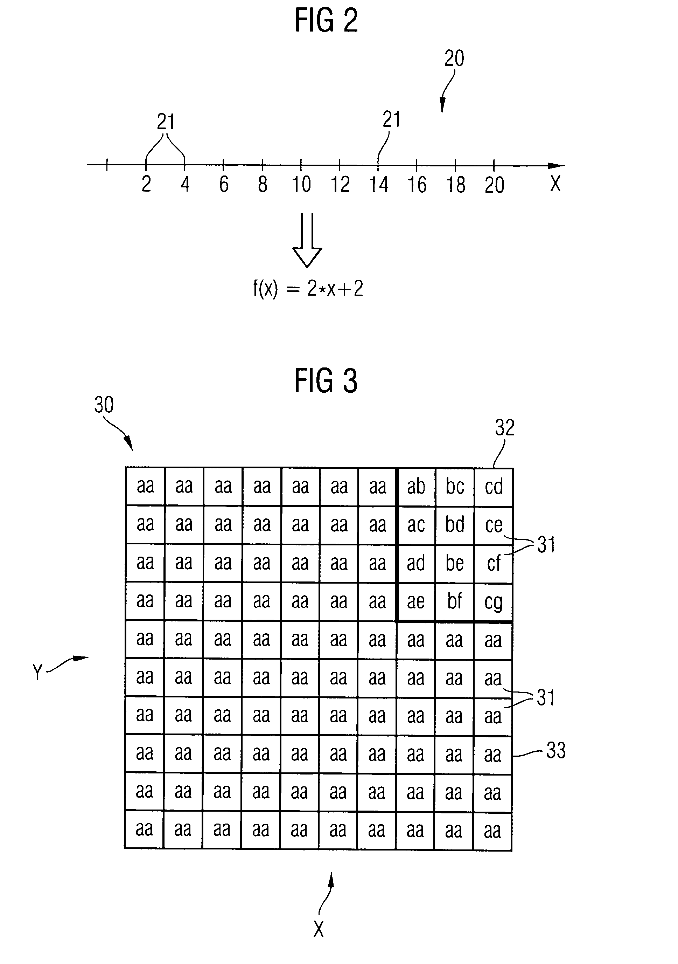

Fig. 2 zeigt ein Schema eines Kalibrations-Arrays zur Darstellung eines zweiten Ausführungsbeispiels des erfindungsgemäßen Verfahrens.

Fig. 2 zeigt ein eindimensionales Kalibrations-Array 20. Das Kalibrations-Array 20 umfasst hier also lediglich eine einzige Koordinate X, welche somit lediglich einem einzigen physikalischen Parameter entspricht. Dieses Kalibrations-Array 20 ist als Kennlinie mit insgesamt 10 Stützstellen mit den Werten 2, 4, 6, 8, 10, 12, 14, 16, 18, 20 belegt.

Unter einer Stützstelle werden hier und im Allgemeinen in der numerischen Mathematik die Argumente von Funktionen bezeichnet, die für die weitere Berechnung benutzt werden. Dieser Begriff, der zum Beispiel häufig für die Interpolation oder bei der numerischen Integration verwendet wird, bezeichnet zum Beispiel das Raster auf einer Koordinatenachse, wohingegen der dieser Stützstelle bzw. dem entsprechenden Koordinatenraster zugehörige Funktionswert auch als Stützwert bezeichnet wird.

Die Kennlinie mit diesen 10 Stützstellen entspricht also der folgenden Geradengleichung:

$$f(x) = 2x + 2.$$

Diese Geradengleichung, die das eindimensionale Kalibrations-Array 20 nachbildet, kann also durch eine einfache Multiplikation und eine Addition ersetzt werden. Eine Multiplikation und eine Addition sind typischerweise Speicherplatz reduziert verglichen mit einer Kennlinie mit 10 Stützstellen. Auch hier ergibt sich eine signifikante Reduzierung der Rechenlast der programmgesteuerten Einrichtung, da für die Multiplikation und Addition ein geringerer Rechenaufwand eines Prozessors erforderlich ist, als für eine Interpolationsroutine zur Ermittlung der sich durch die 10 Stützstellen ergebenden Geradengleichung.

Fig. 3 zeigt ein Schema eines Kalibrations-Arrays zur Darstellung eines dritten Ausführungsbeispiels des erfindungsgemäßen Verfahrens.

In Fig. 3 ist ein Kennfeld 30, welches einem zweidimensionalen Kalibrations-Array 30 entspricht, dargestellt. Dieses Kennfeld 30 enthält zwei Koordinatenachsen X, Y, die somit zwei unterschiedlichen physikalischen Parametern entsprechen.

Das Kennfeld 30 umfasst $10^2 = 100$ einzelne Elemente 31, wobei jedes dieser Elemente 31 einen Dateninhalt von z. B. 2 Byte umfasst.

Es sei angenommen, dass dieses Kennfeld 30 in einem oberen rechten zusammenhängenden Bereich 32 jeweils unterschiedliche Dateninhalte für die verschiedenen Elemente 31 dieses Bereichs 32 enthält. Dieser Bereich 32 enthält insgesamt 12 einzelne Elemente 31. Der übrige Bereich 33 des Kennfeldes 30, der ebenfalls zusammenhängend ist, weist demgemäß insgesamt 88 einzelne Elemente 31 auf. Diese 88 Elemente 31 im übrigen Bereich 33 des Kennfeldes 30 weisen demgegenüber jeweils zueinander identische also konstante Dateninhalte aa auf.

Für das Kennfeld 30 existieren nun zumindest zwei Möglichkeiten der Einsparung von Rechen- und Speicherressourcen:

-   In einer ersten Variante wird die Größe des Kennfeldes 30 auf beispielsweise insgesamt 4 * 5 Stützstellen reduziert. Damit ist eine Einsparung des Speicherbedarfs um 80% realisierbar.

-   Eine demgegenüber andere Variante sieht eine funktionelle Fallunterscheidung für die Elemente 31 des oberen Bereichs 32 gegenüber den Elementen 31 in dem übrigen Bereich 33 vor. Hier kann z. B. vorgesehen sein, dass die Elemente 31 des oberen Bereichs 32 in bekannter Weise jeweils interpoliert werden, wohingegen die übrigen Elemente im übrigen Bereich 33 vollständig durch einen einzigen konstanten Wert, ähnlich dem Ausführungsbeispiel in Fig. 1, ersetzt werden. Es lässt sich hier sogar eine noch größere Reduzierung des Speicherbedarfs realisieren, da statt der 100 verschiedenen Elemente 31 nunmehr nur noch eine Fallunterscheidung von 1 + 12 = 13 unterschiedlicher Werte gemacht werden muss. Das entspricht einer Speicherreduzierung um 87%.

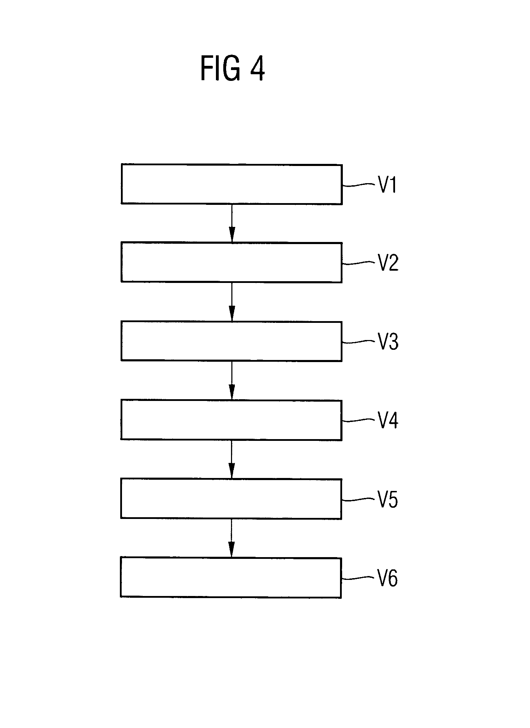

Fig. 4 zeigt anhand eines Ablaufdiagramms ein besonders bevorzugtes Verfahren zur Erkennung und Reduzierung des Dateninhalts eines Kalibrations-Arrays für ein Steuergerät. Dieses Verfahren umfasst die folgenden Schritte:

Schritt V1:

Zunächst wird ein generischer Regelalgorithmus, der z. B. durch Kalibrationsgrößen von mehrdimensionalen Kalibrations-Arrays konfiguriert werden soll, entwickelt. Dieser generische Regelalgorithmus ist für eine Vielzahl verschiedener Steuergeräte und Anwendungen gleich. Anschließend wird dieser generische Regelalgorithmus entsprechend kodiert. Dies geschieht beispielsweise durch eine C-Programmierung.

Schritt V2:

Anschließend erfolgt eine projektspezifische Einbindung der generischen Regelalgorithmen. Bei dieser projektspezifischen Einbindung der generischen Regelalgorithmen werden diese auf die jeweiligen Anforderungen, die beispielsweise durch Kundenwünsche vorgetragen werden, angepasst. Die so eingebundenen generischen Regelalgorithmen werden anschließend durch C++-Programmierung wieder entsprechend kodiert.

Schritt V3:

Anschließend erfolgt eine projektspezifische Kalibrierung, beispielsweise basierend auf dem Ergebnis eines z.B. zuvor durchgeführten, so genannten Software-Build-Prozesses, bei dem in einem früheren Verfahrensschritt das Steuerprogramm bereits erzeugt wurde.

Schritt V4:

Nach dieser projektspezifischen Kalibrierung werden die ein- oder mehrdimensionalen Kalibrations-Arrays dahingehend überprüft, ob diese reduzierbare Kalibrationsgrößen enthalten.

Hierzu werden die mehrdimensionalen Kalibrations-Arrays dahingehend untersucht, ob z. B. mehrere oder alle Elemente dieses Kalibrations-Arrays jeweils denselben Wert aufweisen oder zusätzlich oder alternativ ob diese einem spezifischen mathematischen Zusammenhang genügen.

Schritt V5:

Für diesen Fall erfolgt eine Adaption der in dem Kalibrations-Array abgelegten Kalibrationsgrößen und vorzugsweise der entsprechenden Auswertealgorithmen. Dies geschieht z. B. dadurch, dass die verschiedenen Kalibrationsgrößen, die jeweils einen gleichen Wert aufweisen, durch eine Konstante gleichen Wertes ausgetauscht werden. Für den Fall, dass sich im Verfahrensschritt V4 ergeben hat, dass verschiedene Kalibrationsgrößen des Kalibrations-Arrays einem mathematischen Zusammenhang genügen, dann werden diese Werte durch diesen mathematischen Zusammenhang ersetzt. Nicht notwendigerweise zwingende Voraussetzung kann hierfür sein, dass der Speicherbedarf für diesen erkannten mathematischen Zusammenhang zumindest geringer ist als der Speicherplatzbedarf für die jeweiligen unveränderten, also nicht adaptierten Kalibrationsgrößen. Der besondere Vorteil besteht darin, dass durch dieses Ersetzen möglicherweise ein sonst erforderlicher rechenintensives Interpolationsalgorithmus vollständig entbehrlich ist oder zumindest nicht vollständig und damit vereinfacht implementiert werden kann. Insbesondere für den Fall, dass ein komplettes Kalibrations-Array durch einen einzigen konstanten Wert ersetzt wird, entfällt dieser Interpolationsalgorithmus vollständig, was die Rechenintensität dieses Schrittes signifikant reduziert.

Schritt V6:

Anschließend wird in bekannter Weise das Verfahren zur Erzeugung des Steuerprogramms für die Motorsteuerung auf der Basis des speicherplatzreduzierten Kalibrations-Arrays. Dieser anschließend durchgeführte, so genannte Software-Build-Prozess liefert nun ein speicherplatzsparendes Programm für die Motorsteuerung, welches die konfigurierten Regelalgorithmen beinhaltet und bei dem vorzugsweise auf das Kalibrations-Array vollständig verzichtet werden kann, wohingegen die Quellcodes des Steuerprogramms dieses Kalibrations-Array noch beinhalten.

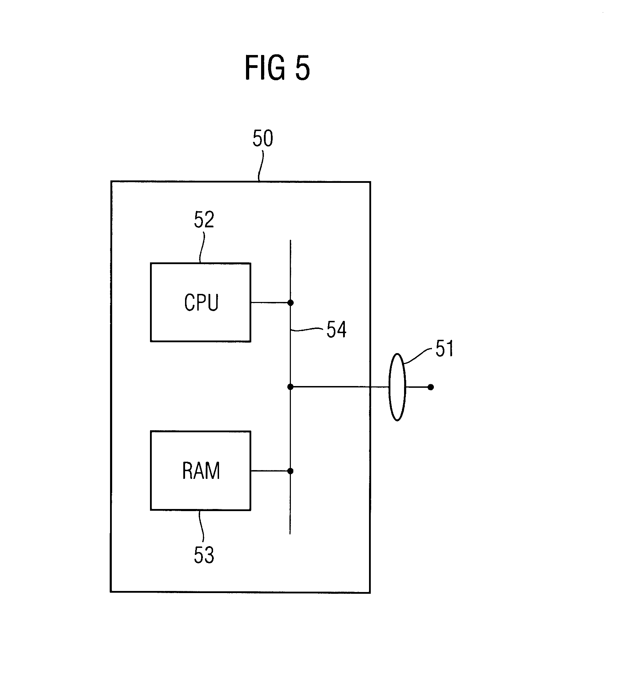

Fig. 5 zeigt ein schematisches Ausführungsbeispiel für ein Steuergerät, in welchem das vorstehend erläuterte erfindungsgemäße Verfahren implementiert ist. Es sei angenommen, dass das mit Bezugzeichen 50 bezeichnete Steuergerät ein Motorsteuergerät ist.

Das Motorsteuergerät 50 enthält eine Eingangs-/Ausgangsschnittstelle 51, über welche Daten- und Steuersignale aus dem Steuergerät 50 ausgelesen werden können oder in das Steuergerät 50 geschrieben werden können. Das Motorsteuergerät 50 enthält ferner eine programmgesteuerte Einrichtung 52, eine Speichereinrichtung 53 und einen internen Bus 54. Die programmgesteuerte Einrichtung 52 ist z. B. als Prozessor oder CPU ausgebildet. Die Speichereinrichtung 53 ist z. B. ein RAM-Speicher. Die programmgesteuerte Einrichtung 52 und die Speichereinrichtung 53 sind über den internen Bus 54 miteinander und mit der Eingangs-/Ausgangsschnittstelle 51 verbunden. In der programmgesteuerten Einrichtung 52 erfolgt die Abarbeitung der Regelalgorithmen auf der Basis eines z.B. in dem Speicher 53 abgelegten Kalibrations-Arrays. Der besondere Vorteil ist nun, dass in diesem Speicher 53 lediglich das speicherreduzierte Kalibrations-Array, welches entsprechend einem der in den Fig. 1-4 beschriebenen Verfahren erzeugt wurde, abgelegt werden muss, wodurch diese Speichereinrichtung 53 flächenreduzierter ausgebildet sein kann. Da die Informationen im Speicher 53 einen geringeren Speicherplatzbedarf benötigen, kann die programmgesteuerte Einrichtung 52 mit einer reduzierten Rechenleistung dimensioniert sein.

Obgleich die vorliegende Erfindung vorstehend anhand bevorzugter Ausführungsbeispiele beschrieben wurde, sei sie nicht darauf beschränkt, sondern ist auf beliebige Art und Weise modifizierbar.

So sei die Erfindung nicht ausschließlich auf die Verwendung bei einem Motorsteuergerät beschränkt, sondern kann selbstverständlich bei beliebigen Steuergeräten eingesetzt werden.

Insbesondere muss das besonders bevorzugte Verfahren, welches anhand der Fig. 4 dargestellt wurde, auch nicht notwendigerweise sämtliche Schritte V1 - V6 beinhalten. Wesentlich für das erfindungsgemäße Verfahren sind insbesondere die Schritte V4 und V5. Auf eine projektspezifische Einbindung der generisch bereitgestellten Regelalgorithmen und eine entsprechende projektspezifische Kalibrierung kann unter Umständen auch verzichtet werden.

Darüber hinaus wurden in den vorstehenden Ausführungsbeispielen auch allgemein auf das Ermitteln mathematischer Zusammenhänge abgestellt. Solche mathematischen Zusammenhänge können zum Beispiel, wie in dem Ausführungsbeispiel dargelegt wurde, linear oder davon abgeleitete Funktionen sein. Ein mathematischer Zusammenhang kann zum Beispiel auch dadurch gegeben sein, dass jeweils ein konstanter Wert vorhanden ist. In diesem Fall ist diese mathematische Funktion eine Konstante.

Die Verwendung der Kalibrier-Arrays und die Ermittlung von Kalibrierwerten durch Interpolation von in dem Kalibrier-Array abgelegten Werten haben den Hintergrund, dass oftmals mathematische Zusammenhänge für das Verhalten von verschiedenen Funktionen eines Verbrennungsmotors nicht bekannt sind. Häufig sind diese mathematischen Zusammenhänge lediglich quantitativ bekannt, beispielsweise aus Erfahrungswerten, Schätzwerten oder dergleichen. Diese Informationen werden nun verwendet, um durch Interpolation eine ungefähre Kenntnis über die entsprechenden mathematischen Zusammenhänge zu ermitteln. Dies ist in den meisten Fällen auch ausreichend für die Steuerung der verschiedenen Motorfunktionen.

Bei den vorstehend genannten Basismotorfunktionen, die z.B. durch das Motorsteuergerät geregelt oder gesteuert werden, gehören z.B. die elektronische Einspritzung und Zündung, Ansteuerung und Regelung der Drosselklappe (E-Gas), Regelung der Aufladung bei einem Turbolader durch z.B. den Ladeluftdruck, Regelung der Leerlaufdrehzahl, das Gemischverhältnis von Luft zu Kraftstoff, die Abgasrückführung, die Öffnungs- und Schließwinkel der Kurbelwellenwinkel der Ein- und Auslassventile, die katalytische Abgasreinigung (Lambdaregelung), OBD-Eigendiagnose und dergleichen.

Die Sensordaten können z.B. den angesaugten Luftmassenstrom, Winkel-/Drehzahlgeber von Kurbel- und Nockenwelle, Winkelgeber der Drosselklappe, barometrischer Umgebungs-Luftdruck, Signal der Lambdasonde, Kraftstoffdrucksignal, Temperatur der Motorkühlflüssigkeit, Temperatur der angesaugten Luft, Klopfsensor, und dergleichen bezeichnen. Die Bediener-Signale sind z. B. Gaspedalwinkel Bremssignal.

## Patentansprüche

1.  Verfahren zur Bereitstellung eines Speicherplatzreduzierten Steuerprogramms in einem Steuergerät, insbesondere in einem Motorsteuergerät, mit den Schritten:

    (a) Bereitstellen eines zumindest eindimensionalen Kalibrations-Arrays für einen Regelalgorithmus, wobei jede Dimension des Kalibrations-Arrays einem Parameter zugeordnet ist und wobei ein jeweiliges Kalibrations-Array Kalibriergrößen mit vorgegebenen Kalibierwerten enthält;
    (b) Untersuchen der Kalibrationsgrößen des Kalibrations-Arrays auf mathematische Zusammenhänge;
    (c) Ersetzen zumindest.eines Teils des Inhalts des Kalibrations-Arrays durch eine die erkannten mathematische Zusammenhänge wiedergebende mathematische Funktion, sofern diese mathematische Funktion einen geringeren Speicheraufwand erfordert oder das Ausführen dieser mathematischen Funktion einen geringeren Rechenaufwand in Anspruch nimmt;
    (d) Konfigurieren des Regelalgorithmus unter Verwendung der gefundenen mathematischen Funktion.

2.  Verfahren zur Bereitstellung eines Speicherplatzreduzierten Steuerprogramms in einem Steuergerät, insbesondere in einem Motorsteuergerät, mit den Schritten:

    (a) Bereitstellen eines zumindest eindimensionalen Kalibrations-Arrays für einen Regelalgorithmus, wobei jede Dimension des Kalibrations-Arrays einem Parameter zugeordnet ist und wobei ein jeweiliges Kalibrations-Array Kalibriergrößen mit vorgegebenen Kalibierwerten enthält;
    (b) Untersuchen der Kalibrationsgrößen des Kalibrations-Arrays auf mathematische Zusammenhänge;
    (c) Reduzieren zumindest eines Teils des Inhalts des Kalibrations-Arrays durch ein die erkannten mathematische Zusammenhänge wiedergebende reduziertes Kalibrations-Array, sofern das reduzierte Kalibrations-Array einen geringeren Speicheraufwand erfordert oder eine Interpolation der Kalibrationswerte des reduzierten Kalibrations-Arrays einen geringeren Rechenaufwand in Anspruch nimmt;
    (d) Konfigurieren des Regelalgorithmus unter Verwendung des reduzierten Kalibrations-Arrays.

3.  Verfahren nach einem der vorherigen Ansprüche, **dadurch gekennzeichnet,** **dass** zunächst zumindest ein codierter generischer Regelalgorithmus bereitgestellt wird, welcher für eine Vielzahl verschiedener generischer Steuergeräte vorgesehen ist.

4.  Verfahren nach Anspruch 3, **gekennzeichnet durch** ein Anpassen und Codieren des generischen Regelalgorithmus an ein projektspezifisch vorgegebenes Steuergerät.

5.  Verfahren nach einem der vorherigen Ansprüche, **gekennzeichnet durch** ein Erzeugen des Steuerprogramms des Steuergeräts auf der Basis des modifizierten Kalibrations-Arrays im Anschluss an den Verfahrensschritt (d).

6.  Verfahren nach einem der vorherigen Ansprüche, **dadurch gekennzeichnet,** **dass** die vorgegebenen Kalibierwerte aus Erfahrungswerten und/oder aus Tabellen und/oder aus Schätzwerten abgeleitet sind.

**7.** Verfahren nach einem der vorherigen Ansprüche, **dadurch gekennzeichnet, dass** die mathematischen Zusammenhänge mehrfach vorhandene, identische Kalibrierwerte und/oder Stützstellen für jeweils dieselbe Kalibriergröße des Kalibrations-Arrays bezeichnen.

**8.** Verfahren nach einem der vorherigen Ansprüche, **dadurch gekennzeichnet, dass** zumindest eine Anwendung des Interpolationsalgorithmus ersetzt wird durch eine die Interpolation ersetzende und/oder zumindest nachbildende mathematische Funktion.

**9.** Verfahren nach einem der vorherigen Ansprüche, **dadurch gekennzeichnet, dass** bei der Untersuchung im Schritt (b), ob ein mathematischer Zusammenhang besteht, überprüft wird, ob ein auf der Basis des nicht ersetzten bzw. des nicht reduzierten Kalibrations-Arrays durchgeführter Interpolationsalgorithmus zu gleichen Ergebnissen führt wie der diesen mathematischen Zusammenhang ersetzenden mathematische Funktion bzw. bei dem diesen mathematischen Zusammenhang wiedergebenden reduzierten Kalibrations-Arrays.

**10.** Verfahren nach Anspruch 9, **dadurch gekennzeichnet, dass** bei der Überprüfung eine vorgegebene Tolleranzschwelle vorgesehen ist, innerhalb der ein Ergebnis noch als gleich angesehen wird.

**11.** Verfahren nach Anspruch 2, **gekennzeichnet durch** ein Ersetzen einer Kalibriergröße **durch** einen einzigen konstanten Wert, sofern das Kalibrations-Array zumindest teilweise für diese Kalibriergröße mit identischen vorgegebenen Kalibierwerten belegt ist.

**12.** Verfahren nach Anspruch 2, **gekennzeichnet durch** ein Ersetzen des gesamten Kalibrations-Arrays **durch** einen einzigen konstanten Wert, sofern das gesamte Kalibrations-Array vollständig mit identischen vorgegebenen Kalibierwerten belegt ist.

**13.** Verfahren nach Anspruch 2, **gekennzeichnet durch** ein Ersetzen des gesamten Kalibrations-Arrays **durch** ein Kallibrations-Array mit reduziertem Inhalt, sofern das gesamte Kalibrations-Array zumindest teilweise mit identischen vorgegebenen Kalibrierwerten belegt ist.

**14.** Verfahren Anspruch 1, **gekennzeichnet durch** ein Ersetzen einer Kalibriergröße **durch** die ermittelte mathematische Funktion, sofern sich die Werte dieser Kalibriergröße oder deren Stützstellen **durch** eine mathematische Funktion beschreiben lassen.

**15.** Verfahren nach einem der vorherigen Ansprüche, **dadurch gekennzeichnet, dass** jede Dimension des Kalibrations-Arrays einem physikalischen Parameter, wie z. B. dem Ladedruck, der Temperatur, der Motordrehzahl und dergleichen, zugeordnet ist.

**16.** Computerprogrammprodukt, das direkt in den internen Speicher einer programmgesteuerten Einrichtung ladbar ist und das Softwarecodeabschnitte umfasst, mit denen die Verfahrensschritte gemäß einem der vorherigen Ansprüche ausgeführt werden, wenn das Produkt auf der programmgesteuerten Einrichtung abläuft.

# FIG 1

# FIG 1A

# FIG 2

20

21                    21

|    |    |    |    |    |    |    |    |    |    |    |
2    4    6    8    10   12   14   16   18   20   X

$$f(x) = 2*x+2$$

# FIG 3

30                                                        32

| aa | aa | aa | aa | aa | aa | aa | ab | bc | cd |
| aa | aa | aa | aa | aa | aa | aa | ac | bd | ce |
| aa | aa | aa | aa | aa | aa | aa | ad | be | cf |
| aa | aa | aa | aa | aa | aa | aa | ae | bf | cg |
| aa | aa | aa | aa | aa | aa | aa | aa | aa | aa |
| aa | aa | aa | aa | aa | aa | aa | aa | aa | aa |
| aa | aa | aa | aa | aa | aa | aa | aa | aa | aa |
| aa | aa | aa | aa | aa | aa | aa | aa | aa | aa |
| aa | aa | aa | aa | aa | aa | aa | aa | aa | aa |
| aa | aa | aa | aa | aa | aa | aa | aa | aa | aa |

31

31

33

Y

X

# FIG 4

V1

V2

V3

V4

V5

V6

# FIG 5

**EUROPÄISCHER RECHERCHENBERICHT**

Nummer der Anmeldung

EP 08 00 9837

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 198 19 445 A1 (VOLKSWAGEN AG [DE]) 4. November 1999 (1999-11-04) * Zusammenfassung * * Seite 2, Zeile 1 - Seite 3, Zeile 41 * * Seite 4, Zeile 43 - Seite 7, Zeile 57 * * Seite 12, Zeile 56 - Seite 13, Zeile 38 * * Ansprüche 1-4,14 * | 1,3-10, 14-16 | INV. G05B19/042 F02D28/00 |
| X | JP 61 026174 A (FUJITSU LTD) 5. Februar 1986 (1986-02-05) * Zusammenfassung * ----- | 1,16 | |
| X | DE 103 39 405 B3 (PIERBURG GMBH [DE]) 3. März 2005 (2005-03-03) * Zusammenfassung * * Absätze [0001], [0003], [0007] * * Absätze [0022] - [0028] * * Absatz [0033] * * Anspruch 1 * ----- | 2,11-13 | |
| X | DE 43 04 441 A1 (BOSCH GMBH ROBERT [DE]) 18. August 1994 (1994-08-18) * Zusammenfassung * * Spalte 6, Zeilen 27-66 * * Spalte 8, Zeilen 6-27 * * Abbildungen 2,5 * ----- | 2,11-13 | **RECHERCHIERTE SACHGEBIETE (IPC)** G05B F02D |

Der vorliegende Recherchenbericht wurde für alle Patentansprüche erstellt

| Recherchenort | Abschlußdatum der Recherche | Prüfer |
|---|---|---|
| München | 6. Oktober 2008 | Schriefl, Josef |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

EP 2 128 727 A1

**ANHANG ZUM EUROPÄISCHEN RECHERCHENBERICHT**
**ÜBER DIE EUROPÄISCHE PATENTANMELDUNG NR.**

EP 08 00 9837

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-10-2008

| Im Recherchenbericht angeführtes Patentdokument | | Datum der Veröffentlichung | Mitglied(er) der Patentfamilie | | Datum der Veröffentlichung |
|---|---|---|---|---|---|
| DE 19819445 | A1 | 04-11-1999 | AT | 291163 T | 15-04-2005 |
| | | | AT | 242425 T | 15-06-2003 |
| | | | WO | 9957426 A1 | 11-11-1999 |
| | | | EP | 1075594 A1 | 14-02-2001 |
| | | | ES | 2199569 T3 | 16-02-2004 |
| JP 61026174 | A | 05-02-1986 | JP | 1659462 C | 21-04-1992 |
| | | | JP | 3022328 B | 26-03-1991 |
| DE 10339405 | B3 | 03-03-2005 | KEINE | | |
| DE 4304441 | A1 | 18-08-1994 | JP | 3512845 B2 | 31-03-2004 |
| | | | JP | 6259101 A | 16-09-1994 |

EPO FORM P0461

Für nähere Einzelheiten zu diesem Anhang : siehe Amtsblatt des Europäischen Patentamts, Nr.12/82

15